Europäisches Patentamt

European Patent Office

Office européen des brevets

(11) Publication number : **0 648 717 A2**

(12) **EUROPEAN PATENT APPLICATION**

(21) Application number : **94307491.4**

(22) Date of filing : **12.10.94**

(51) Int. Cl.[6] : **C04B 35/591**

(30) Priority : **12.10.93 JP 278958/93**

(43) Date of publication of application :
**19.04.95 Bulletin 95/16**

(84) Designated Contracting States :
**DE FR GB**

(71) Applicant : **ISUZU CERAMICS RESEARCH
INSTITUTE CO., LTD.
8, Tsuchidana
Fujisawa-shi, Kanagawa-ken (JP)**

(72) Inventor : **Kita, Hideki
6389-106, Tsujidoh
Fujisawa-shi, Kanagawa 251 (JP)**

(74) Representative : **Flint, Adam et al
Gill Jennings & Every
Broadgate House
7 Eldon Street
London EC2M 7LH (GB)**

(54) **Reaction sintered ceramics and method of producing the same.**

(57) $Si_3N_4$ having a high thermal conductivity is produced from Si by a reaction sintering process. As a ceramic comprises Si, $Y_2O_3$, and $Al_2O_3$, the proportion of a sum weight of $Al_2O_3$ and $Y_2O_3$ to the total weight of the ceramic is 15% to 28% and the weight ratio of $Y_2O_3$ to $Al_2O_3$ is 3 :1 to 10 :1. The thermal conductivity of the ceramic is increased as compared with a conventional ceramic.

EP 0 648 717 A2

EP 0 648 717 A2

The present invention relates to a reaction sintered ceramics having a higher thermal conductivity and to a method of producing the same.

It is known in the production of silicon nitride ($Si_3O_4$) from silicon (Si) that during a reaction sintering process, an oxide substance is added to a parent material for accelerating the nitridation of silicon and increasing the mechanical strength of a silicon nitride product. Such processes are disclosed in Japanese Patent Laid-open Publications 58-88173 (1983), 59-152271 (1984), 59-207876 (1984), 59-207877 (1984), 59-217673 (1984), and 60-186470 (1985), and Japanese Patent Publications 59-34677 (1984) and 59-34678 (1984).

Reaction sintered silicon products produced by the foregoing processes are increased more or less in mechanical strength but fail to describe the thermal conductivity. It is thus said that none of the conventional reaction sintered silicon products is favourably high in thermal conductivity.

It is an object of the present invention to provide a reaction sintered ceramic having a higher thermal conductivity as produced by a reaction sintering process.

It is another object of the present invention to provide a method of producing a reaction sintered ceramic having a higher thermal conductivity.

A reaction sintered ceramic consisting mainly of silicon nitride produced from a mixture of silicon (Si), yttrium oxide ($Y_2O_3$), and alumina ($Al_2O_3$) has a high thermal conductivity when its components are mixed in a desired ratio.

In the production of such a reaction sintered ceramic from a mixture of Si, $Y_2O_3$, and $Al_2O_3$ in addition of titanium (Ti), when the nitridation of Ti to form titanium nitride (TiN) is carried out in the atmosphere of high temperature, TiN tends to turn to titanium oxide ($TiO_2$) thus decreasing the thermal conductivity. For compensation, an organic silicon polymer is added for impregnation after the nitridation and the sintering is conducted under a non-oxidation atmosphere. As a result, the change to $TiO_2$ which is low in thermal conductivity is prevented and the resultant ceramic becomes high in density since its porous regions having been closed, thus increasing the thermal conductivity.

Also, when a reaction sintered ceramic of silicon nitride is produced from a mixture of Si, $Y_2O_3$, $Al_2O_3$, and Ti, it is a good idea to add silicon carbide (SiC) and aluminum nitride (AlN) to increase the thermal conductivity.

In the drawings:

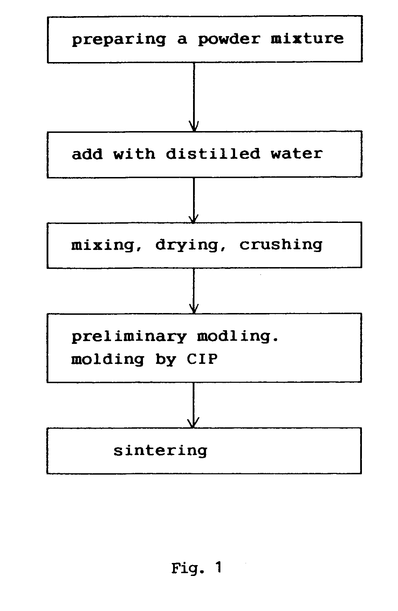

Fig. 1 is a flowchart diagram illustrating a method of the present invention.

The preferred embodiments of the present invention will be described.

According to a first embodiment, a powder mixture of Si, $Al_2O_3$, and $Y_2O_3$ is prepared of a given amount, added with distilled water of 1.5 times the total weight of the powder mixture, and commingled by balls of $Si_3N_4$ in a ball mill for about 24 hours. The mixture is then dried and milled to a powder form by a ball mill for approximately 15 hours.

The powder mixture is loaded into a set of moulds and preliminarily pressed by monoaxial pressing to a specific form. The form is further pressed by a CIP (cold isostatic press) or rubber press technique to a block of 15x15x80mm. The block is placed in a furnace and heated under the atmosphere of $N_2$ gas at 0.93 MPa to produce a sintered structure.

In particular, the ratio of material components in the material mixture and the sintering temperature during the above operation, were varied in some combinations as shown in Tables 1 to 4, which show the characteristics of reaction sintered ceramics produced from different combinations of four material components according to the first embodiment. Also, to make a plurality of test pieces, each of the resultant sintered ceramic products was finished in the form of a pellet, 1.5mm +_0.03, for examining the thermal conductivity, and a bar, 3x4x40mm, for conducting a bending test. The thermal conductivity was examined at room temperature by a laser flash method and the mechanical strength was measured by a four-point bending test. Other conditions were that the total number of the test pieces of each oxide product was 20, the measuring span was 30 mm, and the cross head speed was 5 mm/min.

The porosity was measured by immersing a test piece in water in a vacuum container, reducing the inner pressure to less than 60 mmHg, and maintaining for as long as 48 hours. The test piece was dried with a paper towel removing droplets from its surface and weighed. The porosity is hence a ratio of an addition of weight after the absorption of water to a product of the density of water and the volume of the test piece at the temperature.

As apparent from Tables 1-4, the porosity varies depending on the sintering temperature, as does the thermal conductivity and the mechanical strength. It is desired as a criterion that the thermal conductivity of a common reaction sintered product of $Si_3N_4$ heated at 1400°C (of the known reaction sintering temperature) is more than 8 W/m.K and of a low porous sintered product of $Si_3N_4$ having a porosity of 5% or less is more than 25 W/m.K.

Such a high thermal conductivity is achieved when the proportion of the sum weight of $Al_2O_3$ and $Y_2O_3$ to the total weight of the components ($Si+Al_2O_3+Y_2O_3$) is within a range from 15 % to 28 % and, simultaneously,

2

the weight ratio of $Y_2O_3$ to $Al_2O_3$ is from 3:1 to 10:1, as shown in Tables 1-4. This is explained by the fact that the 1400°C sintered product is enhanced in the bonding between its crystalline particles so as to increase the thermal conductivity as compared with non-oxide $Si_3N_4$ and by the fact that the 1850°C sintered product is decreased in the proportion of a solid solution as compared with common $Si_3N_4$ and restricted in phonon scattering.

Fig. 1 is a flowchart diagram showing a series of steps for producing the reaction sintered ceramic of the first embodiment.

According to a second embodiment of the present invention, a sintered product is produced by adding 10% of Ti, as its characteristics are shown in Table 5, where the proportion of the sum weight of $Al_2O_3$ and $Y_2O_3$ to the total weight of the components is 19.4% and the weight ratio of $Y_2O_3$ to $Al_2O_3$ is 5.0:1. The procedure of producing this sintered product is similar to that of the first embodiment. While the sintering is carried out at 1400°C, the nitridation of Ti (for forming TiN) causes some expansion which can offset the contraction after heating to almost zero. The resultant sintered product is highly porous with a higher thermal conductivity. However, under the atmosphere of high temperature and high oxidation, TiN may be oxidised to $TiO_2$, causing the thermal conductivity to decrease sharply as shown in the lower row of Table 5.

For compensation, an organic polymer of polycalboxylane was applied for impregnation. This attenuates the oxidation of TiN and produces a high density after thermal decomposition under the atmosphere of ammonia, thus ensuring a high thermal conductivity.

According to a third embodiment of the present invention, a sintered product is produced by adding SiC and AlN in the same procedure as of the first and second embodiments and its characteristics are shown in Table 6.

As apparent, the resultant sintered product is increased in thermal conductivity due to the addition of SiC and AlN to a proper combination of $Al_2O_3$ and $Y_2O_3$.

It is understood that the present invention is not limited to the above embodiments and various changes and modifications will be possible without departing from the scope of the present invention.

As set forth above, the ceramic products produced by the reaction sintering method according to the present invention are higher in thermal conductivity than the conventional ones.

| | A | B | C | D | E |
|---|---|---|---|---|---|
| F | 10.0 | 1400 | 8.7 | 325 | 27.1 |
| | " | 1550 | 11.8 | 344 | 18.8 |
| | " | 1700 | 16.5 | 470 | 8.8 |
| | " | 1850 | 34.8 | 680 | 2.5 |
| | 5.0 | 1400 | 9.2 | 311 | 24.3 |
| | " | 1550 | 13.8 | 333 | 19.5 |
| | " | 1700 | 21.0 | 421 | 9.0 |
| | " | 1850 | 47.0 | 635 | 3.1 |
| | 3.0 | 1400 | 9.1 | 350 | 26.0 |
| | " | 1550 | 15.4 | 381 | 19.0 |
| | " | 1700 | 20.8 | 404 | 8.9 |
| | " | 1850 | 32.0 | 621 | 2.1 |
| | 1.0 | 1400 | 7.5 | 281 | 22.0 |
| | " | 1550 | 8.8 | 305 | 16.5 |
| | " | 1700 | 17.4 | 387 | 14.3 |
| | " | 1850 | 22.8 | 595 | 3.0 |

A :  proportion of $\dfrac{Y_2O_3}{Al_2O_3}$

B :  sintering temperature (° C)

C :  thermal conductivity (W/m.K)

D :  strength of four-point bending test(MPa)

E :  ratio of porosity(%)

F :  the proportion of the sum weight of $Al_2O_3$ and $Y_2O_3$ to the total weight of the materials = 15wt%

Table 1

|   | A | B | C | D | E |
|---|---|---|---|---|---|
| F | 10.0 | 1400 | 9.1 | 340 | 29.1 |
|   | " | 1550 | 16.4 | 399 | 17.8 |
|   | " | 1700 | 21.8 | 405 | 16.5 |
|   | " | 1850 | 43.8 | 681 | 2.8 |
|   | 5.0 | 1400 | 10.2 | 356 | 28.5 |
|   | " | 1550 | 14.0 | 394 | 27.4 |
|   | " | 1700 | 22.0 | 596 | 23.0 |
|   | " | 1850 | 45.0 | 777 | 3.1 |
|   | 3.0 | 1400 | 9.4 | 310 | 27.6 |
|   | " | 1550 | 12.5 | 404 | 21.0 |
|   | " | 1700 | 18.8 | 557 | 17.5 |
|   | " | 1850 | 39.5 | 724 | 3.6 |
|   | 1.0 | 1400 | 8.4 | 343 | 26.1 |
|   | " | 1550 | 8.6 | 400 | 22.0 |
|   | " | 1700 | 17.0 | 506 | 17.5 |
|   | " | 1850 | 20.8 | 688 | 3.7 |

A : proportion of $\dfrac{Y_2O_3}{Al_2O_3}$

B : sintering temperature (°C)

C : thermal conductivity (W/m.K)

D : strength of four-point bending test(MPa)

E : ratio of porosity(%)

F : the proportion of the sum weight of $Al_2O_3$ and $Y_2O_3$ to the total weight of the materials = 19.4wt%

Table 2

| | A | B | C | D | E |
|---|---|---|---|---|---|
| F | 10.0 | 1400 | 8.8 | 289 | 25.0 |
| | " | 1550 | 10.9 | 305 | 19.5 |
| | " | 1700 | 18.4 | 421 | 16.0 |
| | " | 1850 | 38.8 | 606 | 2.9 |
| | 5.0 | 1400 | 8.4 | 298 | 27.0 |
| | " | 1550 | 12.8 | 345 | 18.7 |
| | " | 1700 | 24.0 | 421 | 16.5 |
| | " | 1850 | 31.0 | 628 | 3.1 |
| | 3.0 | 1400 | 8.5 | 305 | 24.3 |
| | " | 1550 | 14.9 | 411 | 21.0 |
| | " | 1700 | 16.8 | 488 | 18.0 |
| | " | 1850 | 34.5 | 650 | 1.9 |
| | 1.0 | 1400 | 7.8 | 299 | 28.4 |
| | " | 1550 | 13.8 | 309 | 24.0 |
| | " | 1700 | 14.5 | 545 | 12.0 |
| | " | 1850 | 22.0 | 594 | 2.4 |

A : proportion of $\dfrac{Y_2O_3}{Al_2O_3}$

B : sintering temperature (° C)

C : thermal conductivity (W/m.K)

D : strength of four-point bending test(MPa)

E : ratio of porosity(%)

F : the proportion of the sum weight of $Al_2O_3$ and $Y_2O_3$ to the total weight of the materials = 28wt%

Table 3

| | A | B | C | D | E |
|---|---|---|---|---|---|
| F | 10.0 | 1400 | 6.7 | 350 | 28.0 |
| | " | 1550 | 10.1 | 388 | 26.5 |
| | " | 1700 | 14.3 | 424 | 14.3 |
| | " | 1850 | 22.0 | 606 | 2.6 |
| | 5.0 | 1400 | 7.1 | 303 | 27.6 |
| | " | 1550 | 9.6 | 371 | 18.9 |
| | " | 1700 | 7.9 | 433 | 8.8 |
| | " | 1850 | 23.8 | 511 | 2.1 |
| | 3.0 | 1400 | 4.8 | 299 | 26.4 |
| | " | 1550 | 8.9 | 306 | 24.0 |
| | " | 1700 | 10.4 | 401 | 8.9 |
| | " | 1850 | 22.4 | 578 | 2.5 |
| | 1.0 | 1400 | 7.4 | 288 | 23.1 |
| | " | 1550 | 9.2 | 303 | 18.8 |
| | " | 1700 | 8.0 | 400 | 9.4 |
| | " | 1850 | 19.8 | 506 | 2.1 |

A : proportion of $\dfrac{Y_2O_3}{Al_2O_3}$

B : sintering temperature (°C)

C : thermal conductivity (W/m.K)

D : strength of four-point bending test(MPa)

E : ratio of porosity(%)

F : the proportion of the sum weight of $Al_2O_3$ and $Y_2O_3$ to the total weight of the materials = 38wt%

Table 4

7

| A | B | C | D 10 | E | F |
|---|---|---|---|---|---|
| Si, Al$_2$O$_3$, Y$_2$O$_3$, Ti | Yes | 42.0 | 24.8 | 390 | $\alpha$, $\beta$ -Si$_3$N$_4$<br>TiN<br>Si-Al-O-Y-N |
| | No | 42.0 | 8.4 | 294 | $\alpha$, $\beta$ -Si$_3$N$_4$<br>TiO$_2$<br>Si-Al-O-Y-N |

A : materials
B : an organic polymer of polycalboxylane is applied or
    not
C : thermal conductivity(before oxidation) (W/m.K)
D : thermal conductivity(after oxidation) (W/m.K)
E :strength of four-point beding test(before oxidation)(MPa)
F : generative phase after oxidation

Table 5

| A | B | C | D | E | F |
|---|---|---|---|---|---|
| Si, Al₂O₃. Y₂O₃. Ti, + SiC (AlN) | Sic. 10 | 1400 | 19.8 | 398 | Yes |
| | 20 | 1400 | 20.4 | 378 | Yes |
| | 30 | 1400 | 19.9 | 360 | Yes |
| | 60 | 1400 | 20.8 | 299 | Yes |
| | Aln. 10 | 1400 | 16.7 | 388 | Yes |
| | 40 | 1400 | 18.8 | 325 | Yes |
| | 70 | 1400 | 21.0 | 294 | Yes |

A : materials
B : weight of additive SiC, AlN(wt%)
C : sinterting temperature (° C)
D : thermal conductivity (W/m.K)
E : strength of four-point bending test(MPa)
F : an organic polymer of polycalboxylane is applied or
    not

Table 6

## Claims

1. A reaction sintered ceramics produced by a reaction sintering method to have a high thermal conductivity, comprising an appropriate phase of $Si_3N_4$ and one or more of elements selected from a group of Si, O, N, Al, and Y, where the proportion of a sum weight of $Al_2O_3$ and $Y_2O_3$ produced from Al and Y to the total weight of components ($Si+Al_2O_3+Y_2O_3$) is 15 % to 28 % and the weight ratio of $Y_2O_3$ to $Al_2O_3$ is 3:1 to 10:1.

2. A reaction sintered ceramics produced by a reaction sintering method to have a high thermal conductivity, comprising: a continuous body consisting mainly of elements of Si, O, N, Ti, Al, and Y; a part or the entire porous region of the continuous body consisting mainly of elements selected from Si, O, N, Ti, Al and Y filled with an appropriate phase of one or more of elements selected from Si, C, N, and 0.

3. A reaction sintered ceramics according to claim 2, wherein the proportion of a sum weight of $Al_2O_3$ and $Y_2O_3$ in the continuous body to the total weight of components ($Si+Al_2O_3+Y_2O_3$) is 15% to 28% and the weight ratio of $Y_2O_3$ to $Al_2O_3$ is 3:1 to 10:1.

4. A reaction sintered ceramics produced by a reaction sintering method to have a high thermal conductivity, comprising a structure consisting mainly of elements of Si, O, N, Al, Y, and Ti, where a phase of at least one of SiC and AlN is dispersed in the structure.

5. A reaction sintered ceramics according to claim 4, wherein the proportion of a sum weight of $Al_2O_3$ and $Y_2O_3$ in the structure to the total weight of components $(Si+Al_2O_3+Y_2O_3)$ is 15% to 28% and the weight ratio of $Y_2O_3$ to $Al_2O_3$ is 3:1 to 10:1.

6. A method of producing a reaction sintered ceramics with a high thermal conductivity, comprising the steps of measuring a given combination of $Al_2O_3$ and $Y_2O_3$, adding distilled water, mixing them in a ball mill before drying and crushing, forming a preliminary shape in a set of moulds by a CIP technique, and heating the shape for sintering.

```
┌─────────────────────────────────┐
│   preparing a powder mixture    │
└─────────────────────────────────┘
                 │
                 ↓
┌─────────────────────────────────┐
│     add with distilled water    │
└─────────────────────────────────┘
                 │
                 ↓
┌─────────────────────────────────┐
│    mixing, drying, crushing     │
└─────────────────────────────────┘
                 │
                 ↓
┌─────────────────────────────────┐
│   preliminary modling.          │
│   molding by CIP                │
└─────────────────────────────────┘
                 │
                 ↓
┌─────────────────────────────────┐
│           sintering             │
└─────────────────────────────────┘
```

Fig. 1